# EUROPÄISCHE PATENTSCHRIFT

(11) **EP 0 605 825 B1**
(45) Veröffentlichungstag und Bekanntmachung des Hinweises auf die Patenterteilung: **02.06.1999**
(21) Anmeldenummer: 93120360.8
(22) Anmeldetag: 17.12.1993
(51) Int. Cl.: C08J 11/00, C08L 33/12

(54) **Thermoplastische Kunststoff-Formmasse, Verfahren zu ihrer Herstellung und daraus erzeugter Formkörper**
Thermoplastic plastics moulding matter, process of manufacture and moulding made therefrom
Matière résineuse à mouler thermoplastique, procédé de sa fabrication et pièce moulée fabriquée à partir de celle-ci

(30) Priorität: 24.12.1992 DE 4244092
(43) Veröffentlichungstag der Anmeldung: 13.07.1994
(73) Patentinhaber: Röhm GmbH, 64293 Darmstadt (DE)
(72) Erfinder: Blass, Rudolf, D-64291 Darmstadt (DE); Höss, Werner, Dipl.-Ing., D-63150 Heusenstamm (DE)

(56) Entgegenhaltungen:
- EP-A- 0 455 116
- DE-A- 3 511 711

## Beschreibung

Die Erfindung betrifft eine thermoplastische Kunststoff-Formmasse aus wiederaufbereiteten Kraftfahrzeug-Heck- und - Blinkleuchten, ein Verfahren zu ihrer Herstellung und daraus erzeugte Formkörper. Die Erfindung dient der Wiederverwendung des in gebrauchten bzw. unbrauchbaren Leuchten enthaltenen Kunststoffes.

Die Wiederverwendung von Werkstoffen gewinnt - gefördert von gesetzlichen Auflagen und Verpflichtungen - zunehmende wirtschaftliche Bedeutung. Im Zuge einer möglichen gesetzlichen Rücknahmeverpflichtung von ausgemusterten Kraftfahrzeugen stellt sich die Aufgabe, neben dem Stahl als Hauptbestandteil auch andere darin enthaltene Werkstoffe, darunter auch den Kunststoffanteil, wiederzuverwerten. Als leicht verwertbar gelten sortenreine Kunststoffe, sofern sie sich aus Altfahrzeugen mit vertretbarem Zerlegungsaufwand ohne Vermischung mit Fremdwerkstoffen zurückgewinnen lassen. Im Aussehen und in den technischen Eigenschaften sind rückgewonnene Kunststoffe der zweckentsprechenden Neuware in der Regel unterlegen. Dies liegt einerseits an den Folgen des langjährigen Gebrauchs, der mit Verschmutzung, Verwitterung, Oxydation und Schädigung durch Licht, Wärme und Korrosionsmittel einhergeht, andererseits an der zwischenzeitlich erreichten Verbesserung entsprechender Kunststoffsorten.

Aus diesen Gründen ist ein echter Werkstoff-Kreislauf, bei dem der Kunststoff der gleichen Anwendung zugeführt wird, aus der er zurückgewonnen wurde, in der Praxis kaum möglich.

Die Kunststoff-Wiederverwertung wird besser durch das Bild einer absteigenden Kaskade veranschaulicht, bei der das Eigenschaftsniveau des wiederverwendeten Kunststoffes niedriger liegt als das Niveau der vorausgehenden Nutzung. Das Ziel der Erfindung liegt darin, die "Wiederverwertungskaskade" so flach wie möglich zu gestalten, d.h. einen möglichst geringen Qualitätsverlust bei der Wiedernutzung zu erreichen.

Zu den Kunststoffteilen aus Kraftfahrzeugen, die für eine Wiederverwertung in Betracht kommen, gehören auch die Heck- und Blinkleuchten. Sie enthalten in der Regel eine lichtdurchlässige, gegebenenfalls eingefärbte Abdeckung aus Polymethylmethacrylat (PMMA) und ein damit verschweißtes Gehäuse aus ABS-Kunststoff. Außerdem sind Lampenfassungen, Glühlampen, elektrische Kabel und Befestigungsteile aus Metall oft so fest mit dem Kunststoffkörper verbunden, daß eine vollständige Zerlegung aus technischen und wirtschaftlichen Gründen nicht in Betracht kommt. Lediglich Gummidichtungen zur Abdichtung der Heck-und Blinkleuchten in den entsprechenden Einbauöffnungen der Karosserie lassen sich gegebenenfalls von Hand entfernen.

Es werden bereits Verfahren entwickelt, um abmontierte vollständige Heck- und Blinkleuchten zur Wiederverwendung aufzubereiten. Sie werden insgesamt zerkleinert und das Mahlgut durch Magnetabscheider, Rüttelrinnen, Windsichter und ähnliche Vorrichtungen so weit wie möglich in verschiedene Werkstoffe aufgetrennt. Diese Trennung bleibt stets unvollkommen, so daß mit Glassplittern, Metallspänen, Kabelresten, Gummiteilchen u.ä. in dem überwiegend aus Kunststoff bestehenden Mahlgut zu rechnen ist. Außerdem verbleiben in dem Mahlgut die Reste der aus Aluminium bestehenden Verspiegelungsschicht von Kunststoffreflektoren.

Der aus Heck- und Blinkleuchter zurückgewinnbare Kunststoff bietet sich bislang lediglich als Mixed Plastic für die Herstellung von minderwertigen Formteilen an, zum Beispiel für Parkbänke, Lärmschutzwände, Spulenkörper und dergl. Eine nochmalige physikalisch-stoffliche Wiederverwertung nach derartigen Nutzungen kommt kaum in Betracht, so daß der Kunststoff nach seiner zweiten Nutzung aus dem Verwertungskreislauf ausscheiden würde.

Analysen des gereinigten Mahlgutes haben für den Kunststoffanteil folgende durchschnittliche Zusammensetzung ergeben:
50 - 65 Gew.-% Polymethylmethacrylat (PMMA)
25 - 40 Gew.-% schlagzähe ABS-Kunststoffe
1 - 20 Gew.-% Polycarbonat-Kunststoffe (PC)

Aus der DE-A 40 13 700 ist die Eignung von thermoplastischen Kunststoffen der gleichen Zusammensetzung für die Herstellung hochwertiger technischer Formteile für den Fahrzeugbau, beispielsweise Teile von Lampengehäusen, bekannt. Es wird dort auf die Möglichkeit hingewiesen, derartige Kunststoffe teilweise oder ausschließlich aus Recycling-Komponenten zusammenzusetzen. Die Komponenten fallen z.T. schon als Mischungen, beispielsweise von ABS und PC, bei der Abfallverwertung an. Die Eigenschaftswerte sind denen aus entsprechender Kunststoff-Neuware praktisch gleich. Dies gilt jedoch nur für die Wiederverwertung von Produktionsabfällen, die unvermeidlich bei der Herstellung von Kraftfahrzeug-Heck- und Blinkleuchten anfallen. Diese Abfälle sind in der Regel nicht mit Fremdwerkstoffen, wie Metallen oder Glas, verunreinigt, weil die Ausschußteile noch nicht einbaufertig mit Lampenfassungen, Glühlampen, Anschlußkabeln, Befestigungsteilen u.dergl. ausgerüstet waren. Sie stellen einen reinen Kunststoffabfall dar, dessen technische Eigenschaften denen der entsprechenden Neuware nicht nachsteht.

Werden dagegen vollständige Heck- und Blinkleuchten von Altfahrzeugen gesammelt, so muß aus den oben genannten Gründen mit einer wesentlichen Verschlechterung des Eigenschaftsbildes gerechnet werden.

Der Erfindung liegt die Aufgabe zugrunde, den aus Heck- und Blinkleuchten von Kraftfahrzeugen rückgewinnbaren Kunststoff einer möglichst hochwertigen Wiederverwendung zuzuführen. Dem Ideal des Werkstoffkreislaufes käme man verhältnismäßig nahe, wenn der Kunststoff aus wiederverwendeten Heck- und Blinkleuchten wenigstens für die Herstellung der nicht-transparenten Teile solcher Leuchten wiederverwendet werden könnte.

Voraussetzung für eine hochwertige Wiederverwendung sind entsprechend hohe technische Eigenschaftswerte, insbesondere eine Vicaterweichungstemperatur von wenigstens 102°C, eine Zugfestigkeit von wenigstens 50 MPa oder eine Reißdehnung von wenigstens 3 %. Diese Werte sind für die Herstellung von Gehäuseteilen für Heck- und Blinkleuchten ausreichend.

Es wurde gefunden, daß sich eine thermoplastische Kunststoff-Formmasse der Zusammensetzung:
50 - 65 Gew.-% Polymethylmethacrylat oder Copolymerisate des Methylmethacrylats mit 1 bis 20 Gew.-% an damit copolymerisierbaren äthylenisch ungesättigtes, radikalisch polymerisierbares Monomeren, insbesondere niederen Alkylacrylaten,
25 - 40 Gew.-% schlagzähe Kunststoffe auf der Basis von Acrylnitril, Butadien und Styrol (ABS),
1 - 20 Gew.-% Polycarbonat-Kunststoffe (PC)
mit den oben angegebenen Eigenschaften gewinnen läßt, die überwiegend oder ganz aus wiederverwendeten Kfz-Rück- und Blinkleuchten besteht.

Das in der beschriebenen Weise vorgereinigte Mahlgut ergibt bei der thermoplastischen Verarbeitung noch nicht die erforderlichen Eigenschaften. An spritzgegossenen Prüfkörpern wurden eine Zugfestigkeit von 47 - 48 MPa und eine Reißdehnung von 2,2 % gemessen. Der Verwendung als technische Formmasse stehen vor allem Störungen bei den Fließvorgängen in Extrusions- und Spritzgußwerkzeugen entgegen.

Kennzeichnend für die aus Heck- und Blinkleuchten wiedergewonnenen thermoplastischen Formmassen ist ein Gehalt an partikelförmigen Bestandteilen, die bei Verarbeitungstemperaturen bis 250^{o}C nicht schmelzbar sind. Sie machen in dem vorgereinigten Mahlgut einen Anteil von 5 bis 10 Gew.-% aus. Durch eine Verminderung dieses Anteils auf weniger als 5 Gew.-%, insbesondere auf 1 bis 4 Gew.-%, läßt sich das Eigenschaftsniveau so anheben, daß eine technische Wiederverwertung zu anspruchsvollen Formteilen möglich wird. Für die Eigenschaften der Formmasse spielt die Größe der enthaltenen unschmelzbaren Partikel eine Rolle. Liegt sie unter 0,2 mm, gemessen als Maschenweite eines zur Filtration der Schmelze verwendeten Siebes oder Filters, so ist eine störungsfreie Verarbeitung auf üblichen Spritzgieß- und Extrusionsmaschienen möglich. Die Verminderung der Partikelgröße auf weniger als 0,1 mm bringt eine Verbesserung der Oberflächenqualität der erzeugten Spritzgußteile mit sich. Durch Schmelzefiltration bei einer Siebmaschenweite von 0,04 mm werden auch gelartig elastische Partikel, die aus Gummidichtungen stammen können, abgetrennt, die sonst infolge thermischer Zersetzung bei der Verarbeitung zu Schlierenbildung führen. Die äußere Erscheinung des Kunststoffes wird durch den Gehalt an schwarzen Pigmentteilchen und Aluminiumpartikeln aus Reflektorflächen geprägt. Sie ergeben eine glatte, glänzende, schwarze Oberfläche, die für die technische Wiederverwendung in der Regel willkommen ist.

Charakteristische Eigenschaftswerte für die erfindungsgemäße Formmasse sind

| | |
|---|---|
| Vicaterweichungstemperatur | 106°C |
| Zugfestigkeit nach DIN 53 455 | 53,5 MPa |
| Reißdehnung nach DIN 53 455 | 3,4 % |
| E-Modul nach DIN 53 455 | 3112 MPa |
| Schlagzähigkeit nach Charpy (ISO 179) | 9,13 kJ/m² |
| Kerbschlagzähigkeit nach Izod (ISO 180) | 2,02 kJ/m² |
| Schmelzviskosität bei 220^{o}C, 5 MPa | 1163 Pa s |
| Schmelzindex MFI 230^{o}C/3,8 | 3,58 g/10 min |
| reduzierte Viskosität in Chloroform | 52,0 ml/g |
| Glanz nach DIN 67 530 bei 20/30/85^{o} | 60,0/83,1/96,8 |
| Zusammensetzung PMMA/ABS/PC: | 57 / 29-35 / 4 - 10 % |

Die Schlagzähigkeit kann durch Zusatz von ABS-Formmassen verbessert werden. Zusatzmengen von 5 bis 25 Gew.-% erhöhen die Schlagzähigkeit deutlich, wie aus folgender Tabelle hervorgeht:

| | |
|---|---|
| ohne Schlagzähmodifier | 9,1 kJ/m² |
| 5 % Schlagzähmodifier | 10,5 kJ/m² |
| 10 % Schlagzähmodifier | 10,8 kJ/m² |
| 15 % Schlagzähmodifier | 12,8 kJ/m² |

Als Schlagzähmodifier kann ebenfalls wiederverwertetes Material aus Produktionsabfällen oder aus sortenreinen gebrauchten Formteilen eingesetzt werden.

Die Entfernung von unschmelzbaren Partikeln aus dem vorgereinigten Mahlgut ist grundsätzlich in der Weise möglich, daß das Mahlgut in einem organischen Lösemittel, wie Aceton oder Chloroform gelöst, die Lösung filtriert und das Lösemittel verdampft wird. Diese Arbeitsweise ist wenig wirtschaftlich. Überraschenderweise konnte eine für die technische Wiederverwendbarkeit ausreichende Reinigung durch Schmelzefiltration erreicht werden. Diese Maßnahme erweist sich als wirtschaftlich, wenn die Porenweite des Filters so gewählt wird, daß einerseits die Partikel, die maßgeblich zur Eigenschaftsverschlechterung beitragen, entfernt werden, aber andererseits hohe Verluste durch Ausschleusung von partikelreichem Material vermieden werden. Es wurde gefunden, daß dieses Ziel bei Porenweiten von 0,1 bis 0,2 mm erreicht wird. Bei Porenweiten bis 0,1 mm steigt der Filtrationsdruck infolge Verstopfung der Filterporen steil an. Die Filtration feinerer Partikel läßt sich jedoch durch eine Filterkaskaskade mit schrittweise abnehmender Porenweite, beispielsweise bis 0,04 mm, beherrschen. Bei Porenweiten über 0,2 mm nähern sich die Eigenschaftswerte denen des unfiltrierten Materials an. Auch ist mit Problemen bei engen Werkzeugkanälen zu rechnen. Am besten hat sich eine Porenweite von etwa 0,2 mm bewährt, weil sie gute Materialeigenschaften, geringe Materialverluste bzw. niedrigen Filterverbrauch und gute Verarbeitungseigneschaften gewährleistet. Für die technische Durchführung der Schmelzefiltration eignen sich kontinuierliche Filter (vgl. D. Brünger, "Kunststoffe" Band 82, 1992, S.971-973). Sie enthalten meist in den Schmelzestrom hineinragende rotierende Filterscheiben. Dadurch werden mit Partikeln beladene Filterflächen aus dem Schmelzestrom herausgeführt und frische Filterflächen hineingeführt. Die beladenen Filterflächen können entweder ersetzt oder mit einem Seitenstrom des filtrierten Materials in Gegenstromrichtung kontinuierlich gereinigt werden. Der partikelreiche Abstrom wird verworfen. Derartige Filtrationsanlagen werden zweckmäßig in eine Extrusionsmaschine eingebaut, auf der das vorgereinigte Mahlgut homogen vermischt und zu einem gleichförmigen Formmassengranulat extrudiert und gebrochen wird. Gleichzeitig können Schlagzähmodifier, Gleitmittel, Stabilisatoren gegen den oxydativen Abbau dienhaltiger Polymerer und andere übliche Zusätze eingearbeitet werden.

Die aufbereitete granulierte Formmasse kann auf üblichen Spritzgießmaschinen zu hochwertigen Formteilen verarbeitet werden. Die Verarbeitungseigenschaften entsprechen weitgehend denen von PMMA-Formmassen. Die Herstellung von lichtundurchlässigen Teilen von Kraftfahrzeug-Heck- und Blinkleuchten, insbesondere Leuchtengehäuse, ist ein bevorzugtes Anwendungsgebiet, da dadurch der Verwertungskreislauf nahezu geschlossen wird. Die erreichbare Oberflächenqualität ist in der Regel ausreichend, um Reflektorverspiegelungen durch Aufdampfen von Aluminium anbringen zu können. Die Formkörper sind mit üblichen PMMA-Formmassen für die lichtleitenden Teile verträglich und können in herkömmlicher Weise damit verschweißt, verklebt oder verschraubt werden.

## Patentansprüche

1. Thermoplastische Kunststoff-Formmasse der Zusammensetzung
50 - 65 Gew.-% Polymethylmethacrylat oder Copolymerisat des Mthylmethacrylats mit 1 bis 20 Gew.-% an damit copolymersierbaren äthylenisch ungesättigte, radikalisch polymerisierbare Monomeren,
25 - 40 Gew.-% schlagzähe Kunststoffe auf Basis von Acrylnitril, Butadien und Styrol,
1 - 20 Gew.-% Polycarbonat-Kunststoffe, sowie
mit einer Vicaterweichungstemperatur von wenigstens 102 °C, einer Zugfestigkeit von wenigsten 50 MPa und einer Reißdehnung von wenigstens 3 %, wobei der Anteil an partikelförmigen Bestandteilen, die bei 250 °C nicht schmelzbar sind, weniger als 5 Gew.-% beträgt,
dadurch gekennzeichnet,
daß der thermoplastische Kunststoff überwiegend oder ganz aus wiederaufbereiteten Kfz-Rück- und Blinkleuchten besteht und frei von bis 250 °C unschmelzbaren Bestandteilen einer Größe über 0,2 mm (Siebweite) ist.

2. Thermoplastische Kunststoff-Formmasse nach Anspruch 1,
dadurch gekennzeichnet,
daß er frei von bis 250 °C unschmelzbaren Bestandteilen einer Größe über 0,04 mm (Siebweite) ist.

3. Kunststoff-Formmasse nach Anspruch 1, dadurch gekennzeichnet, daß sie zu 5 bis 50 Gew.-% aus neuem oder wiederverwendetem ABS-Kunststoff besteht.

4. Spritzgegossenes Kunststoff-Formteil aus einer Kunststoff-Formmasse nach einem der Ansprüche 1 und 3.

5. Kfz-Rück- oder Blinkleuchtengehäuse, dadurch gekennzeichnet, daß es aus einem thermoplastischen Kunststoff gemäß einem der Ansprüche 1 und 3 besteht.

6. Kfz-Rück- oder Blinkleuchtengehäuse nach Anspruch 5, dadurch gekennzeichnet, daß es mit einer lichtdurchlässigen Abdeckung aus PMMA verbunden ist.

7. Verfahren zur Herstellung der Kunststoff-Formmasse gemäß einem der Ansprüche 1 und 3, dadurch gekennzeichnet, daß ein von Metallteilen und spezifisch schwereren Materialteilchen weitgehend befreites Mahlgut aus rückgeführten Kfz-Heck- und Blinkleuchten geschmolzen und die Schmelze durch ein Sieb einer Maschenweite von höchstens 0,2 mm filtriert wird.

8. Verfahren nach Anspruch 7, dadurch gekennzeichnet, daß die Schmelze durch ein Sieb einer Maschenweite von mindestens 0,1 mm filtriert wird.

## Claims

1. Thermoplastic plastics moulding composition made up as follows:
50 - 65 wt.-% of polymethyl methacrylate or copolymer of methyl methacrylate with 1 to 20 wt.-% of ethylenically unsaturated, radically polymerisable monomers which are copolymerisable therewith,
25 - 40 wt.-% of impact resistant plastics based on acrylonitrile, butadiene and styrene,
1 - 20 wt.-% of polycarbonate plastics, and
having a Vicat softening temperature of at least 102°C, a tensile strength of at least 50 MPa and an elongation at break of at least 3%, the proportion of particulate ingredients which do not melt at 250°C being less than 5 wt.-%, characterised in that the thermoplastic plastics material consists predominantly or entirely of recycled car rear lights and indicators and is free from ingredients which do not melt at up to 250°C measuring more than 0.2 mm (screening size).

2. Thermoplastic plastics moulding composition according to claim 1, characterised in that it is free from ingredients which cannot be melted up to 250°C measuring more than 0.04 mm (screening size).

3. Plastics moulding composition according to claim 1, characterised in that it consists of 5 to 50 wt.-% of new or recycled ABS plastics.

4. Injection moulded plastics moulding consisting of a plastics moulding composition according to one of claims 1 and 3.

5. Car rear or indicator light housing, characterised in that it consists of a thermoplastic plastics material according to one of claims 1 and 3.

6. Car rear or indicator light housing according to claim 5, characterised in that it is attached to a transparent cover made of PMMA.

7. Method of producing the plastics moulding composition according to one of claims 1 and 3, characterised in that a ground material from recycled vehicle rear and indicator lights, substantially free from metal parts and specifically heavier material particles, is melted and the melt is filtered through a screen with a mesh size of not more than 0.2 mm.

8. Method according to claim 7, characterised in that the melt is filtered through a screen with a mesh size of at least 0.1 mm.

## Revendications

1. Masse à mouler en matière synthétique thermoplastique de composition suivante :
• 50-65 % en poids de polyméthacrylate de méthyle ou de copolymère de méthacrylate de méthyle avec de 1 à 20 % en poids de monomères éthyléniquement polymérisables par voie radicalaire, éthyléniquement insaturés, copolmérisables avec lui,
• 25-40 % en poids de matière plastique résiliante, à base d'acrylonitrile, de butadiène et de styrène,
• 1-20 % en poids de matière plastique polycarbonate, ainsi qu'avec une température de ramollissement de Vicat d'au moins 102°C, une résistance à la traction d'au moins 50 MPa et un allongement à la rupture d'au moins 3 %, la proportion des constituants particulaires, qui ne peuvent fondre à 250°C, étant inférieure à 5 % en poids,
caractérisée en ce que
la matière synthétique thermoplastique est constituée principalement ou entièrement de feux arrières et clignotants de véhicules automobiles recyclés et est dépourvue de composants qui ne peuvent fondre à 250°C d'une taille supérieure à 0,2 mm (ouverture de tamis).

2. Masse à mouler en matière synthétique thermoplastique selon la revendication 1,
caractérisée en ce qu'
elle est dépourvue de composants qui ne peuvent fondre à 250°C, d'une taille supérieure à 0,04 mm (ouverture de tamis).

3. Masse à mouler en matière synthétique selon la revendication 1,
caractérisée en ce qu'
elle se compose à 5 à 50 % en poids de matière synthétique ABS nouvelle ou réutilisée.

4. Pièce moulée en matière synthétique moulée par injection faite d'une masse à mouler en matière synthétique selon l'une des revendications 1 et 3.

5. Boîtier de feux arrières ou clignotants de véhicule automobile
caractérisé en ce qu'
il se compose d'une matière synthétique thermoplastique se) lon l'une des revendications 1 et 3.

6. Boîtier de feux arrières ou clignotants de véhicule automobile selon la revendication 5,
caractérisé en ce qu'
il est relié à une enveloppe transparente en PMMA.

7. Procédé de fabrication d'une masse à mouler en matière synthétique selon l'une des revendications 1 et 3,
caractérisé en ce qu'
• on fait fondre une composition provenant de feux arrières et clignotants de véhicules automobiles recyclés et largement débarrassés de façon spécifique des particules de matériaux lourds, et
• on filtre la masse fondue à travers un tamis d'une ouverture maille d'au plus de 0,2 mm.

8. Procédé selon la revendication 7,
caractérisé en ce qu'
on filtre la masse fondue à travers un tamis d'une ouverture de maille d'au moins 0,1 mm.
